# EUROPEAN PATENT SPECIFICATION

(11) **EP 2 481 300 B1**
(45) Date of publication and mention of the grant of the patent: **15.03.2017**
(21) Application number: 12153047.1
(22) Date of filing: 30.01.2012
(51) Int. Cl.: A23L 33/16, A23L 33/15, A23L 33/17, A23L 33/105, A23L 33/12, A23L 33/175, A23K 20/174, A23K 20/179, A23K 20/111, A23K 20/147, A23K 20/158, A23K 20/10, A23K 20/20, A23K 20/24, A23K 50/20, A23K 20/142, A23L 33/115

(54) **Nutritional composition for equine reproductive health**
Ernährungszusammensetzung zur reproduktiven Gesundheit von Pferden
Composition nutritive pour la santé reproductive équine

(30) Priority: 31.01.2011 NL 1038556; 18.05.2011 NL 2006807
(43) Date of publication of application: 01.08.2012
(73) Proprietor: Primeval BV, 1911 DB Uitgeest (NL)
(72) Inventor: Kat, Dirk Evert, 1911 DB UITGEEST (NL); Dresch, Ira Mirella, 1911 DB UITGEEST (NL)
(74) Representative: Hoyng Rokh Monegier LLP

(56) References cited:
- US-A1- 2004 156 923
- ANONYMOUS: "Magnostar", Flying horse , 2008, pages 32-32, XP002658272, Retrieved from the Internet: URL:http://www.iwest.de/Download/Prospekt_ E_08.pdf [retrieved on 2011-09-06]
- Anonymous: "Vitamins to improve male fertility", www.livestrong.com, 27 March 2007 (2007-03-27), pages 1-2, XP055006320, Retrieved from the Internet: URL:http://www.livestrong.com/article/9848 2-vitamins-improve-male-fertility/ [retrieved on 2011-09-06]
- DATABASE EPODOC EUROPEAN PATENT OFFICE, THE HAGUE, NL; 12 November 2008 (2008-11-12), QINGHUA LIU: "Nutrition health care replenisher for reinforcing reproduction performance of boar", XP002658273, & CN 101 301 402 A (QINGHUA LIU [CN]) 12 November 2008 (2008-11-12)
- A.D. Ellis, M. Boekhoff, L. Bailoni and R. Mantovani: "Nutrition and equine fertility" In: Miraglia N.,Martin-Rosset W.: "Nutrition and feeding of the broodmare", 20 June 2006 (2006-06-20), EAAP, Campobasso, Italy, XP002658274, pages 341-366, * page 356, paragraph 7 - page 359, paragraph 2 *
- Jennifer Steward: "Omega 3 oils benefit horse & rider", , 1 June 2005 (2005-06-01), pages 1-3, XP055006322, Retrieved from the Internet: URL:http://www.mitavite.com.au/mitavite06/ PDF/Nutritional Information PDF/Sport Pdf/OMEGA 3 OILS - BENEFITS FOR THE HORSE & RIDER. SPORT.pdf [retrieved on 2011-09-06]
- Anonymous: "Soybeans, mature seeds, raw", USDA national nutrient database, 1 January 2010 (2010-01-01), pages 1-3, XP055006333, Retrieved from the Internet: URL:http://www.nal.usda.gov/fnic/foodcomp/ cgi-bin/list_nut_edit.pl [retrieved on 2011-09-06]
- Anonymous: "Oats", USDA national nutrient database, 1 January 2010 (2010-01-01), XP055006334, Retrieved from the Internet: URL:http://www.nal.usda.gov/fnic/foodcomp/ cgi-bin/list_nut_edit.pl [retrieved on 2011-09-06]
- Michael A. Porter ET AL: "Variability in Soy Flour Composition", JAOCS, Vol. 80, no. 6 (2003), 1 January 2003 (2003-01-01), pages 557-562, XP055090827, Retrieved from the Internet: URL:http://rd.springer.com/content/pdf/10. 1007/s11746-003-0737-6.pdf [retrieved on 2013-11-29]

## Description

### Field of the Invention

The present invention is directed to an equine nutritional composition suitable for improving the reproductive health of stallions. More particularly, the present invention is directed to a nutritional supplement useful for improving the quality of the fresh or preserved semen of stallions.

### Background to the Invention

Artificial insemination of mares with the semen of stallions has been a common practice in equine breeding programs for a significant period of time. Furthermore, the birth of the first foal conceived by artificial inseminations using freeze-thawed semen occurred almost 50 years ago. Despite having many practical advantages, it is recognised that artificial insemination is often associated with slightly lower pregnancy rates per ovulation cycle than natural breeding. A factor in these low rates may be that the steps of semen collection, cooled or frozen storage, transport and, where applicable, thawing each expose the semen to stresses which diminish its quality relative to "fresh" semen.

The spermatozoa plasma membrane, serving as the main physical barrier to the outside environment, is the primary site of cooling-warming or freeze-thaw damage when equine semen is cooled to, and stored at temperatures less than 5°C. Cooling induces phase separation and lateral lipid rearrangement of membrane components, events that appear to be irreversible upon warming. "Cold shock" damage - associated with a rapid transition of semen from equine body temperature to the storage temperature - has been directly linked to lipid phase transitions, which cause the sperm membrane to become transiently leaky, thereby compromising membrane integrity. And further damage may result from the peroxidation of membrane lipids as a result of formation of reactive oxygen species.

As a further detrimental effect of cooling or freezing, ice nucleation in sperm causes a partitioning of solutes into the unfrozen portion of the cell and creates an osmotic pressure: a corollary to this osmotic pressure is an increased cellular uptake of calcium which is believed to cause fusion of the plasma membrane to the acrosomal membrane and a concomitant reduction in acrosomal reactivity in the thawed sperm. It has also been proposed that cooling decreases spermatozoic concentrations of adenosine triphosphate and 3'-5' cyclic adenosine monophosphate, species which are important to the generation of a flagella wave used for motility.

In short, cooling, freezing or cryopreservation can affect sperm motility, response to osmotic stress and signalling pathways. As a consequence, the ability of the sperm, once warmed or thawed, to reach, bind and react with the zona pellucida of the mare's ova is compromised.

There have been many attempts in the art to correct for the impairment of spermatozoa function caused by these processes and thereby ultimately increase fertility rates. The regulation of the rate of semen cooling can avoid cold shock. The addition of cryoprotectants, such as glycerol, in seminal diluents can aid in cell survival by binding water so that the volume of unfrozen fluid increases, cell dehydration is not as severe, and ice formation is slowed. The timing and number of breeding doses of frozen-thawed semen for a given oestrous cycle can be modified to compensate for the reduced binding ability and re-activity of the freeze-thawed spermatozoa. Furthermore the deposition of the frozen-thawed semen near the tip of the uterine horn adjacent to the pre-ovulatory follicle, rather than simply into the uterine body, can compensate for reduced sperm motility.

In contrast to these techniques, the present application is directed to the controlling the nutrient intake of horses to modify the properties of both the seminal fluid and the spermatozoa and thereby improving the quality of fresh semen and mitigating the detrimental effects of cooling, freezing, thawing and transport. Whilst the use of equine nutritional supplements for certain aspects of reproductive health is known in the art, the present composition and use is not disclosed.

US Patent No. 5,595,982 (Harless) describes an equine nutritional supplement, comprising vitamins and minerals in a lecithin base, for alleviating hormonal imbalances, for extending the age of reproductive capability, and for improving uterine tone in mares and sperm counts in stallions.

US Patent Application Publication No. 2008/0003302 and US 2004/0156923 (Davenport et al.) discloses a composition for improving fertility in mammals including horses, which composition comprises glucosamine, an oil cake component, an acid component, a mineral component, a vitamin component and a functional food component.

Magnostar^{®} is a nutritional composition for horses comprising a mixture of minerals, amino acids, vitamins, unsaturated fatty acids as well as microencapsulated beta-carotene to improve fertility of mares and stallions.

Livestrong recommends use of zinc, vitamin C, selenium, L-arginine, vitamin-E, omega fatty acids and L-carnitine to improve human male fertility.

CN101301402 discloses a nutritional composition to improve boar reproductive health comprising saccharicterpenin, zinc oxide, chromium, arginine, beta carotene, vitamin E, vitamin A, vitamin C, vitamin B12, folic acid, biotin, L-carnitine and glucose.

Ellis et al. Nutrition and feeding of the broodmare, 20 June 2006 discloses nutritional factors influencing fertility in mares and discloses micronutrients such as selenium, carnitine, copper, zinc, and omega 3 fatty acids of relevance for sperm quality.

Steward et al. Omega 3 oils benefit horse and rider, 1 June 2005, discloses the relevance of a high ratio of omega 6 to omega 3 fatty acids to improve fertility.

### Summary of the Invention

In accordance with a first aspect of the present invention there is provided an equine nutritional composition comprising: i) a first component comprising micronutrients, wherein said micronutrients include: based on the weight of the first component: 2 - 25 wt.% L-arginine; 2 - 15 wt.% L-carnitine; 0.5 - 5 wt.% L-lysine; 1 - 10 wt.% L-cysteine; 0.1 - 4 wt.% vitamin E, as all vitamins thereof; 0.001 - 0.1 wt.% vitamin B, as all vitamins thereof; 0 - 25 wt.% rosehip powder; 0.5 - 5 wt.% Maca; 0.5 - 10 wt.% Gingko biloba powder; 0 - 10 wt.% dried garlic; 0 -10 wt.% Lucerne; 0.01 - 0.8 wt.% zinc; 0 - 5 wt.% magnesium; 0 - 5 wt.% calcium; 0.0001 - 0.01 wt.% selenium; and, 0.01 - 6 wt.% further antioxidants, wherein said micronutrients include folate and, ii) a second component comprising one or more fatty acids selected from each of the groups: omega-3 fatty acids; omega-6 fatty acids wherein the ratio by volume of omega-3: omega-6 fatty acids is in the range of from 1.1: 1 to 5: 1, preferably from 1.5: 1 to 3: 1; and wherein at least one of the first and second component is in concentrated form. It is noted that vitamin E may be included as a stabilizer in the second component of the composition.

Without being bound by theory, it is considered that the specific combination of amino acids of the first component serve to stabilize the spermatozoa membrane lipids to phase separation and to lateral lipid re-arrangement, without compromising the extracellular and intracellular transport of fatty acids.

The repeated intake of this composition stallions has been demonstrated to improve - in both fresh, cooled and freeze-thawed sperm - semen consistency and quality, the percentage of active spermatozoa therein, sperm morphology and sperm motility. It is therefore expected that these improvements will contribute to the enhanced pregnancy rates per ovulation cycle in mares inseminated with this semen, when utilizing standard insemination and mare management techniques which may include natural breeding.

As a corollary to the above benefits, the composition should not provide an illegal performance enhancing effect - as defined e.g by FEI Equine Anti-Doping and Controlled Medication Regulations and the Equine Prohibited Substances List - to race horses administered with it: this is obviously important given the high commercial value which semen from race horses can attract. In this regard, the composition is ideally free, at the practical limits of detection, of caffeine, theobromine, theophylline, atropine, scopolamine, morphine, butofenine, methylbufotenine and dimethyltryptamine.

In a preferred embodiment, the first component further comprises at least one phytochemical selected from groups consisting of: carotenoid terpenoid compounds, non-carotenoid terpenoid compounds, flavonoid polyphenolic compounds, phenolic acids and mixtures thereof. It is particularly preferred that leaf, seed or root extracts of at least one of Ginkgo Biloba, lucerne (alfalfa) and maca are used as a source of said phytochemical(s).

The second component the amount of omega-3 fatty acids, by volume, is provided in excess of the individual volumes of omega-6 fatty acids. The ratio by volume of omega-3: omega-6 fatty acids is in the range of from 1.1: 1 to 5: 1, preferably from 1.5: 1 to 3: 1.

The second component may optionally contain omega-9 fatty acids. When present, these omega-9 fatty acids, should be provided in an amount, by volume, which is less than that of the omega-3 fatty acids present in the second component. For example, the ratio by volume of omega-3: omega-9 fatty acids may be in the range from 1.1:1 to 5:1 and preferably from 1.5: 1 to 3: 1. Good results have been obtained when the ratio of omega-3: omega-6: omega-9 fatty acids in the second component of the composition conforms to the ratio of (1.5 - 2.5): 1: (0.7 - 1.3).

In accordance with a third aspect of the invention, there is provided a functional food comprising the composition as defined above in combination with one or more food types that are consumed as part of the usual equine diet. In contrast to the micronutrients of the functional composition, these usual dietary foods will comprise foods of high calorific value, high protein or high fiber content.

The composition, the supplement or the functional food should ideally be storable at room temperature or under normal refrigeration conditions. Further, the ingredients or components of the composition, including the vitamins and other micronutrients can be provided from natural sources, synthetic sources or mixtures thereof. For instance, a first portion of a given vitamin may be provided by a synthetic source and a second portion by a natural source.

In a fourth aspect of the present invention there is provided a method for the artificial insemination of mares with the proviso that the artificial insemination does not comprise in vitro fertilization in which at least a portion of the semen is provided by a stallion which has been administered the composition as defined above, that is the composition *per se* or a nutritional supplement or functional food derived therefrom.

The semen used in this method may have been effectively stored at a temperature of less than 5°C, optionally in the presence of extenders, dilution factor and / or cryoprotectants prior to insemination of the mare. Equally, semen which has been frozen and then thawed prior to insemination of the mare can be used. Typically, the frozen sperm will have been stored in extremely cold temperatures - for instance, in liquid nitrogen at temperatures of-196°C or lower - but a gradual freezing process will have been employed to ensure that the fewest possible sperm are damaged.

### Detailed Description of the Invention

### Definitions

"Micronutrients" are any dietary elements which are needed in small quantities for normal body function but which have no (or negligible, in view of the amounts used) caloric value. Micronutrients include, but are not limited to, vitamins, minerals (including dietary minerals), and amino acids.

As used herein the term "nutritional supplement" denotes a product that supplies micronutrients in concentrated form. The concentration of a micronutrient or mixture thereof is intended to include, but not be limited, to the consolidation, compression and / or conglomeration of the micronutrient(s).

As used herein a "synthetic source" includes a material which has been prepared from available starting materials by a series of biochemical or chemical reactions and, where necessary, partially or fully purified. Whilst it may often be desirable for synthetic sources to be substantially free of any other materials - to be, for instance, more than 95% pure - synthetic sources in which the target material is combined with acceptable carriers, excipients, stabilising agents, anti-caking agents and emulsifiers are also considered to be fall within the scope of this term as used herein. The structure of the synthetic product may correspond exactly to the structure of the component in nature or it can be an analogue of that structure. The synthetic product may be provided in a form which can be modified in the equine body to produce one or more active components (e.g. by the hydrolysis of an ester).

A "natural source" for the purposes of this invention provides the required nutrient in combination with one or more other compounds. Preferably, the required nutrient is provided within its naturally occurring matrix. For example, where vitamin C is provided by an unprocessed vegetable, the vitamin is provided in combination with carbohydrates, fibre, proteins, lipids, chlorophyll and other plant materials.

The required nutrient may be provided as part of a raw and unprocessed material. Alternatively, the raw material may be cooked and / or dried. Still further, the natural source of the required nutrient can be an extract or a derivative obtained by physicochemically processing that raw material and optionally further purifying the resultant product. Finally, the processed, partially processed or unprocessed material can be reconstituted in the form of a solid, semi-solid or liquid.

As used herein, the terms "omega-3 fatty acid", "omega-6 fatty acid" and "omega-9 fatty acid" refer respectively to those families of unsaturated fatty acids that have in common a final carbon-carbon double-bond in the n-3, n-6 and n-9 position counting from the methyl group end of the fatty acid. It is noted that omega-9 fatty acids - unlike omega-3 and omega-6 fatty acids - are not classed as essential fatty acids (EFA) principally by virtue of the fact that they can be created by the horses from unsaturated fat. By contrast, the equine body is unable to provide the required enzyme to introduce a double bond at the omega-6 and omega-3 loci.

Any ratios of fatty acids defined herein refer to ratios by volume. As is known in the art, natural sources are often defined by the percent by volume (% vol.) of the fatty acids they comprise. Due to the similar density of the fatty acids described herein, the mass percentage will often have a similar value as the corresponding volume percentage.

### First Component

The first component of the composition comprises a mixture of the amino acids L-carnitine, L-arginine, L-cysteine and, optionally, L-lysine.

The source used to provide L-arginine may be selected from D,L-arginine, L-arginine, alkyl (ethyl, methyl, propyl, isopropyl, butyl, isobutyl, t-butyl) esters of L-arginine and salts thereof. Pharmaceutically acceptable salts include hydrochloride, glutamate, butyrate, and glycolate. Herein, L-arginine hydrochloride is the preferred source because it occurs in nature itself, it is non-toxic, is highly soluble and is inexpensive. L-arginine should ideally be included in the first component of the composition in an amount of from 5 - 100 e.g. from 20 - 50 mg per kg body weight per day.

The compositions comprise a suitable amount of L-cysteine and / or source of L-cysteine. The phrase "source of cysteine" refers herein to all compounds that contain a biologically available cysteine, in any form, and is calculated as the amount of cysteine amino acid that is present in a compound, or can be derived from a compound in the body after ingestion, on a molar basis.

Suitable sources of L-cysteine are, for example, proteins in denatured and/or un-denatured form such as milk proteins e.g. whey or casein proteins. Egg proteins are rich in cysteine and are therefore also suitable. Plant proteins such as pea, potato, soy and rice can also be used to provide L-cysteine. Also hydrolysates of these protein sources can be used or fractions enriched for cysteine rich proteins or peptides (e.g. as described in EP1201137). According to the present invention the L-cysteine is optimally provided as N-acetyl-L-cysteine of which compound the acetyl group functions to speed the absorption and distribution of the orally ingested cysteine. As is known in the art, N-acetyl-L-cysteine is also the precursor in the formation of the antioxidant glutathione in the equine body.

L-cysteine should ideally be included in the first component of the composition in an amount of from 5 - 100 e.g. from 8 - 40 mg per kg body weight per day.

L-carnitine is directed to the transport of long-chain fatty acids across the inner membrane of mitochondria where fatty acid oxidation takes place. The maintenance of the level of L-carnitine in sperm is therefore considered essential to the effective metabolism of energy substrates therein. As such, L-carnitine should ideally be included in the first component of the composition in an amount of from 5 - 100 e.g. from 8 - 40 mg per kg body weight per day.

As functional equivalents or sources of L-carnitine can be mentioned pharmaceutically acceptable salts thereof or alkanoyl and acyl carnitins, or mixtures thereof. In the present invention, it is preferred to use a lipophilic derivative as the L-carnitine source and most preferably to use acetyl-L-carnitine.

Typically animal feeds are deficient in L-lysine owing to the limiting amount of this amino acid - and methionine (Met) - in cereal and leguminous crops. It is therefore an essential element of the nutritional composition of the present application. The lysine may be directly included in a pharmaceutically acceptable salt, such as lysine hydrochloride crystals (available from DSM, Milano, IT) or it be indirectly added through food grade sources such as crab proteins, fish proteins and whey proteins.

A person of skill in the art will recognise that L-carnitine is synthesized in the body from L-lysine: an equine diet which is low in L-lysine can lead to an L-carnitine deficiency. In practical terms, the formulator of the nutritional composition can use this information to regulate both the individual and the combined levels of these amino acids therein.

L-Lysine should ideally be included in the first component of the composition in an amount of from 0 - 100 e.g. from 5 - 40 mg per kg body weight per day.

It is acknowledged that certain L-arginine and L-lysine derivatives can have an unpleasant taste. Further, in the use of free arginine and lysine, a high osmolarity is obtained by dissolution of mixtures thereof. Under certain circumstances therefore, it may be advisable to include these two amino acids in the form of a peptide, as described in US Patent No. 7,763,706 (Campina).

The food composition necessarily comprises folate which is required *inter alia* for DNA and RNA synthesis and therefore the production of spermatozoa. In an embodiment of the invention, folate is provided in an amount of from 0.01 - 0.1 mg per kilogram body weight per day. Folate can be provided as folic acid, as folic acid ester or preferably as a salt, such as the sodium salt.

The composition may further preferably include one or more of the B vitamins selected from the group consisting of: vitamin B-2 (riboflavin); vitamin B-6 (pyridoxine); vitamin B-1 (thiamine); vitamin B-12 (cobalamin); vitamin B-3 (niacin); and, pantotheic acid.

Vitamin C is also a preferred ingredient of the first component and can be obtained from a number of synthetic sources including but not limited to: crystalline ascorbic acid; ethylcellulose coated ascorbic acid; calcium phosphate salts of ascorbic acid; ascorbyl palmitate; stabilised ascorbyl palmitate; ascorbic acid-2-monophosphate salt; and, ascorbyl-2-monophosphate. Alternatively, the vitamin C can be provided by a natural source, preferably by a plant material. For the purposes of this invention, the plant material can come from any part of a plant - for example, the leaf, root, stem, bark, bulb, fruit, flower or seed - and can be any combination of such parts. The plant material can be unprocessed, semi-processed or processed and can be provided as a solid, an extract, an oil, a powder, dried or in solution.

In accordance with a preferred embodiment of the present invention, rosehip and in particular dried and powdered rosehip, is used as one natural source of vitamin C. This is in part due to the high vitamin C content of this fruit. As a subsidiary benefit, this fruit provides vitamin A, vitamin B, essential fatty acids and antioxidant flavonoids.

Vitamin E is a highly preferred element of the nutritional supplement of this invention. Without being bound my theory, it is considered that enhancing the level of vitamin E within the spermatozoa helps to block lipid peroxidation. As vitamin E interacts with membrane phospholipids, it may also serve to mitigate phase separation and lateral lipid rearrangement of membrane components induced by semen cooling.

The term "vitamin E" as used herein refers to a group of compounds based on 6-chromanol and includes racemic vitamin E (D,L-[alpha]-tocopherol) or natural vitamin E, as well as derivatives thereof which have biological vitamin E activity, e.g. other tocopherols, tocotrienols or carboxylic acid esters, such as vitamin E acetate, propionate, butyrate, palmitate or succinate. The preferred forms of vitamin E for the present invention include D-alpha-tocopherol, D-alpha-tocopherol acetate, DL-alpha-tocopherol and DL-alpha-tocopherol acetate.

Units of vitamin E can be expressed as International Units (IU), where 1 IU of alphatocopherol approximates to 1 mg of alpha-tocopherol. Other vitamin E compounds have their IU determined by their biopotency in comparison to alpha-tocopherol as described in McDowell, L. R (1989) Vitamin E: In vitamins in Animal Nutrition, Chapter 4, page 96, Academic Press, UK. The food supplement will optionally contain vitamin E at a level of from 1 to 20 IU per kilogram body weight per day, more preferably from 3 to 10 IU per kilogram body weight per day.

Whilst it is envisaged that synthetic sources of vitamin E may be useful in the present invention, it is preferred to use natural sources such as soy beans, red palm oil, grape seed oil and spinach.

The first component of the nutritional composition may additionally comprise a number of active phytochemicals which should ideally be used to supplement the activity of vitamins, in particular the antioxidant vitamins described above. In one embodiment, the composition comprises at least phytochemical selected from the groups consisting of: carotenoid terpenoid compounds, non-carotenoid terpenoid compounds, flavonoid polyphenolic compounds, phenolic acids and mixtures thereof.

The source of carotenoids is not intended to be limiting. The following may be mentioned as examples of natural carotenoid sources: marigold meal; lucerne (alfalfa) meal; maize meal; tomato meal; red palm oil; tomato powder; and, tomato pomace or pulp.

Similarly, the source of (poly)phenolic compounds (flavonoids and phenolic acids) is not intended to be limited. Useful (poly)phenolics - such as anthrocyanidins, proanthrocyanidins, catechins, isoflavones, tannins, ellagic acid, chlorogenic acid, phytic acid, ferulic acid, vanillin, cinnamic acid and hydroxycinnamic acid - are well-known phytochemicals and can be suitably derived from the plant sources described, for instance, in M. Zimmerman, Eat Your Colors, Holt, Henry and Co. (2001).

In accordance with a preferred embodiment of the present invention, the nutritional composition includes Gingko leaf and / or seed extracts as source(s) of flavonoids and terpenoids (lactones, ginkgolides and bilobalides). Beneficial effects on semen quality have been achieved when the amount of Ginkgo Biloba extract - referenced with regard to a standardized extract (EGb 761) - is in the range from 1 to 30 mg per kilogram weight per day, for instance from 10 - 25 mg per kilogram weight per day.

As mentioned above, lucerne (alfalfa) can be employed in the composition to provide carotenoids and other complex phytochemicals: lucerne is known to contain *inter alia* beta-carotene, chlorophyll octacosanol, saponins, sterols, flavonoids, and coumarins. Lucerne is a preferred component of the supplement because in addition to these phytochemicals, it provides an important natural source of betaine, the trimethyl derivative of the amino acid glycine. Preferably, the nutritional composition should provide from 1 to 30 mg of lucerne per kilogram bodyweight per day, and more preferably from 5 - 20 mg of lucerne per kilogram weight per day.

The addition of members of the Brassica family - broccoli, cabbage (including savoy cabbage, red cabbage and Chinese cabbage), cauliflower, Brussels sprouts, maca, kale (including curly kale) and chard - to the food composition can provide an important souce of sulphur containing phytochemicals, including glucosinolates, p-methoxybenzyl isothiocyanate and S-methyl-cysteine sulphoxide. As supplementary benefits, plants of this family can easily be prepared in dried, partially dried, cooked or semi-cooked form and can provide a source of vitamin A, vitamin B-2, vitamin B-6, folate, vitamin C, calcium, potassium and selenium.

Of the Brassica family, maca (lepidium meyenii) is a preferred ingredient of the composition. Whilst maca of any color can be employed, the blue and back genetic variants are most preferred. Ideally, the nutritional composition comprises from 0.5 to 10 mg per kilogram bodyweight per day.

In accordance with another embodiment, the composition provides a source of eugenol. This is a naturally occurring aromatic hydrocarbon which is the active ingredient of spices such as cloves (Osmium spp.), garlic and nutmeg. Eugenol has been shown to possess hepatoprotective properties and it is considered that its administration in the present composition results in reduced levels of lipid peroxides in vivo. Eugenol should be provided at levels of from 0.001 - 15 mg / kg bodyweight per day.

By virtue of the vasodilatory, hypoglycaemic, anti-carcinogenic, antimicrobial and antiinflammatory characteristics possessed by garlic, this is preferably used herein as the source of eugenol. The garlic may be in any form: it may be dried, fresh, crushed, in solution, in oil, as a powder, liquid (either as a solution or as an oil) or semi-solid.

Dried garlic should be used in the present composition at levels of from 1 to 30 mg per kilogram body weight, preferably from 2 to 20 mg per kilogram body weight per day. Larger amounts, typically from 2 mg - 100 mg per kilogram body weight per day will be required to provide equivalency when semi-dried or fully hydrated garlic is used.

In certain circumstances, garlic can be replaced by any member of the Allium family including onions, shallots, chives and leeks. The amounts of these ingredients should be modified to ensure that an equivalent level of eugenol and active thioallyl compounds to that provided by the recited amounts garlic.

The composition also includes at least one of calcium, magnesium, selenium, copper and zinc. It is preferred that one or both of calcium and magnesium macrominerals and one or more of the trace elements selenium, copper, and zinc be present.

When present in the composition, the minerals calcium, magnesium and zinc should optimally be provided in an amount of from 0.05 to 5 mg / kg bodyweight per day. These metallic elements can be included in any pharmaceutically acceptable salt. However, the salts of zinc with low molecular weight organic acids - such as orotic, citric, acetic, gluconic and picolinic acids - facilitate the absorption of zinc and are preferred herein.

As an illustration of the benefit of these trace elements, copper and zinc form an integral part of the antioxidant metalloenzyme Cu-Zn-superoxide dismutase, which converts superoxide free radical to hydrogen peroxide: this conversion represents the first line of defence against activated oxygen species.

Selenium functions as a co-factor in the body and specifically as a cofactor within antioxidant metalloenzyme systems. For example, selenium is an essential part of the antioxidant selenoenzyme, glutathione peroxidase. Selenium acts as an antioxidant (with activity as a free radical scavenger) and has been shown to act in combination with vitamin E. It is herein preferred that the composition provides selenium in an amount of from 0.0001 to 0.01 mg / kg bodyweight per day.

### Second Component

As recited above, the second component of the nutritional composition comprises one or more fatty acids selected from each of the groups: omega-3 fatty acids; and, omega-6 fatty acids. The second component may preferably further comprise at least one omega-9 fatty acid.

Suitable omega-3 fatty acids include but are not limited to: alpha-linoleic acid (ALA); stearidonic acid; eicosoatrienoic acid; eicostetraneoic acid; eicosapentaneoic acid (EPA); docosapentaenoic acid; docosahexaenoic acid (DHA); tetracosapentaneoic acid; and, tetracosahexanaenoic acid. Natural sources of these omega-3 fatty acids are well documented and include: fish oils; oils derived from algae; oils produced from plankton (krill in particular); and, leafy vegetable oils. Perilla oil, chia seed oil, argan oil, linseed oil (derived from flax seeds), and lingonberry oil may be noted as important sources. In a preferred embodiment of the invention, the second component of the supplement comprises linseed oil.

Suitable omega-6 fatty acids include but are not limited to: linoleic acid; gamma-linoleic acid; eicosadienoic acid; dihomo-gamma-linoleic acid; arachidonic acid; docosadienoic acid; and, adrenic acid. Natural sources of omega-6 fatty acids include but are not limited to: flaxseeds; vegetable oils, including sunflower, safflower, evening primrose oil, flaxseed oil and sesame seed oil; nuts and seeds, such as pumpkin seeds, pistachio nuts, pine nuts and sunflower seeds; olives and olive oil; whole-grain breads and cereals; poultry; eggs; and, microbiological oils, for example from Mortierella.

Suitable omega-9 fatty acids include but are not limited to: oleic acid; eicosenoic acid (gadoleic acid); eicosa-5,8,11-trienoic acid (mead acid); erucic acid; and, cis-15-tetracosenoic acid (nervonic acid). Natural sources of these omega-9 fatty acids include but are not limited to: olive oil; canola oil; rapeseed oil; wallflower seeds; and, mustard seeds.

The present invention does not preclude the use of further unsaturated fatty acids, not being omega-3, -6 or -9 fatty acids in the second component. As an example of such an acid, palmitoleic acid may be mentioned.

In addition, the second component may optionally contain one or more C4-C24 saturated fatty acids. Typically said saturated acids are selected from the group consisting of: capric acid; lauric acid (dodecanoic acid); myristic acid; palmitic acid; stearic acid; arachidic acid; and, behenic acid (docosanoic acid). Palmitic and stearic acids are major constituents of animal fats, but plant sources, such as coconut, palm, cocoa, and shea nut oils, are also sources thereof.

Whilst it is envisaged that stabilizers, such a vitamin E, should be present in any fatty acid mixture, it is preferred that the fatty acids or fatty acid comprising compounds comprise at least 95%, preferably at least 98% and more preferably at least 99% by volume of the second component.

The fatty acid may be present as an alkyl ester, such as a methyl or ethyl ester, but is preferably present as glycerol ester. Hence, the oil will comprise mainly a tri-ester of fatty acids with glycerol. Generally, minor amounts of glycerol-diester and minor amounts of contaminants are present in oils, such as naturally occurring steroids.

### Further Optional Ingredients

The composition of the present invention may comprise further additives, distributed in the first and / or second components. These additives should preferably be functional and ideally should either facilitate cell membrane transport, have a stabilizing effect on membrane lipid configuration, provide an antioxidant function or act synergistically with the essential and preferred ingredients recited above. As such further ingredients, antioxidants may be mentioned in particular.

The composition of the present invention may further comprise the tripeptide glutathione (GSH) which can function as an antioxidant, preventing cellular damage caused by reactive oxygen species. It is noted that glutathione can be synthesized in the body from the amino acids L-cysteine, L-glutamic acid and glycine. Thereby, the addition of either glutathione or L-glutamic acid in combination with L-cysteine in the nutritional composition, supplement or functional food may ensure the availability of L-cysteine for other cellular functions.

The composition may also optionally contain ubiquinone (also known as ubidecarenone, coenzyme Q or coenzyme Q10). Ubiquinone is an essential cofactor of the electron transport chain as well as a potent free radical scavenger in lipid and mitochondrial membranes. It is thought that the coenzyme interacts with vitamin E to regenerate its antioxidant form.

Any ubiquinone in the composition may be best sourced as a biosynthetic product of microbial fermentation but it could equally be derived from the muscle tissues of animals and from plant sources such as green leafy vegetables. Subject to its presence in the supplement remaining allowable by law, Ubiquinone should be provided at a level of from 0.05 to 10 mg, preferably from 0.1 to 2 mg per kilogram body weight per day.

Further antioxidants which might be mentioned as suitable for inclusion in the composition are: beta-glucan; lycopene; butylated hydroxyanisole; and, butylated hydroxytoluene.

### Nutritional Supplement

In a preferred embodiment of the present invention, the composition is prepared as nutritional supplement, wherein at least one of the first and second components must be provided in concentrated form. With regard to the first component, the ingredients thereof may be mixed together and the resultant mixture subjected to one or more concentrating steps such as heating, compression and extrusion.

The nutritional supplement can be administered orally as, for instance, a liquid solution, suspension or emulsion, a hard or soft capsule, tablet, pill, granules or powder. The granule and powder forms are most preferred as they enable the supplement to be most easily mixed into food, such as by pouring over grain. Controlled and uncontrolled release formulations are also included within this invention.

The nutritional supplement preferably does not contain any conventional sweeteners such as glucose, fructose and dextrose. Whilst the lucerne and garlic mentioned above will also provide taste and flavour to the supplement, other flavoured bases may also be included therein. The nutritional supplement may be formulated with preservatives, stabilizers and emulsifying agents in accordance with accepted practice of supplement compounding. Further, the supplement may be provided together with a suitable organic or inorganic carrier material, which should preferably be inert. As examples of carrier materials water, gelatin, gum arabic, lactose, starch, tragacanth, polyacrylic acid derivatives, methylcellulose, sodium carboxymethylcellulose, low melting waxes, cocoa butter, magnesium stearate and talc may be mentioned. The carrier may also include an encapsulating material.

Some generally known materials useful for nutritional supplements, including excipients, are described in the "Handbook of Pharmaceutical Excipients," Rowe R. C., Sheskey P. J. & Weller, P. J., American Pharmaceutical Association, Washington, 4th edition (2003).

The quantity of the nutritional supplement administered is dependent on various factors such as the bodyweight, age, general health status of the stallion and special nutritional needs of the high performance horse. The determination of the proper daily dosage for a particular stallion will normally be done by the skilled practitioner who will also determine how that daily dosage is divided and up and administered during the course of a given day.

It has been found however that an administration regimen in which: i) from 10 to 50 grams of the first component, for example from 20 to 35 grams, is administered at each of three timings during a day; and ii) from 40 - 100 ml of the second oil component, for example from 60 - 90 ml, is administered in total during that day, engenders the remedial results contemplated herein in stallions not afflicted by an ailment.

It is envisaged that the nutritional supplement for a given stallion may be tailored from a base nutritional material having a basal level of micronutrients and a basal level of omega fatty acids. The base material can comprise basic amounts of micronutrients needed for stallions of average weight (500kg) and health and can provide an initial or pre-customized amount of micronutrients. The base level of these micronutrients in the nutritional supplement may then be customized, based on an individual subject's metabolite profile, to comprise various micronutrients to improve the condition of the subject's semen. This base material may be suitable in itself when the subject does not require tailored nutritional supplementation.

### Illustrative Mode of Carrying Out the Invention

The first, micronutrient component of a highly preferred nutritional supplement is defined by the composition disclosed in Table 1 below:

**Table 1**

| **Ingredient** | **Percentage by Weight (wt.%) based on the weight of the 1^{st} component** |
|---|---|
| L-arginine | 2 - 25 |
| L-carnitine | 2 - 15 |
| L-lysine | 0.5 - 5 |
| L-cysteine | 1 - 10 |
| Vitamin E (total of all vitamins) | 0.1 - 4 |
| Vitamin B (total of all vitamins) | 0.001 - 0.1 |
| Rosehip powder | 0 - 25 |
| Maca (*lepidium meyenii*) | 0.5 - 5 |
| Ginkgo biloba powder | 0.5 - 10 |
| Dried Garlic | 0 - 10 |
| Lucerne (alfalfa) | 0 - 10 |
| Zinc | 0.01 - 0.8 |
| Magnesium | 0 - 5 |
| Calcium | 0 - 5 |
| Selenium | 0.0001 - 0.01 |
| Additional Antioxidants | 0.01 - 6 |

The invention will now be described with reference to the following non-limiting example.

### Example

An initial research group of 12 healthy horses was approved. Then, on the basis of an assessment conducted in part by a veterinary surgeon, 4 horses were excluded from the research group where, in the three months preceding the trial, they had: exhibited an illness, such as a fever or infection; been administered antibiotics or any medicine directed to testicular function; been under extreme conditions of extreme stress or heat; participated in intensive training; or, used an existing nutritional supplement. The remaining 8 horses were then subjected to a 12-week regime of nutritional supplements.

The first component of the nutritional supplement was prepared in accordance with the formulation of Table 2 below, the weight (mg) being per scoop (28g):

**Table 2**

| **Ingredient** | **Weight (mg)** |
|---|---|
| L-arginine monohydrochloride, N-acetyl L-carnitine HCL, N-acetyl L-cysteine, and L-lysine monohydrochloride | 12000 |
| Vitamin E 1162IE (250 IE) | 215 |
| Folic Acid | 3.4 |
| Cyanocobalamine (0.1%) | 0.02 |
| Rosehip Powder | 5000 |
| Powdered Plant Extract Mixture [Ginkgo Biloba, lucerne (alfalfa) and Black Maca (*Lepidium meyenii*)] | 6000 |
| Wild Garlic | 2000 |
| Mineral Salts (of Zn, Ca and Mg) | 2090 |
| Selenomethionine | 0.2 |
| Additional Antioxidants | 150 |

The second component of the nutritional supplement was prepared by mixing linseed oil, sesame seed oil, sunflower oil, willow herb oil and pumpkin seed oil in the presence of Vitamin E as a stabilizer. The resultant mixture had the compositional properties shown Table 2 below:

**Table 3**

| **Ingredient Name** | **Acid Characterisation** | **Volume %** |
|---|---|---|
| Palmitic acid | 16:0 | 5.4 |
| Palmitoleic acid | 16:1 | 0.1 |
| Stearic Acid | 18:0 | 3.8 |
| Oleic Acid | 18:1 (ω-9) | 20.4 |
| Linoleic Acid | 18:3 (ω-6) | 22.1 |
| Alpha-linoleic acid | 18:3 (ω-3) | 47.4 |
| Gamma-linoleic acid | 18:3 (ω-6) | 0.3 |
| Arachinic Acid | 20:0 | 0.2 |
| Gadoleic Acid | 20:1 (ω-9) | 0.2 |
| Behenic Acid | 22:0 | 0.1 |
| Additives | | <0.1 |

In the first 6 weeks of the regime, the horses were administered only the first (micronutrient powder) component of the nutritional supplement. In the second 6 week period, the horses were administered the first and the second components of the composition.

At the start of the 12 week period, an initial analysis was undertaken to evaluate the basic condition of the horses' sperm. During the first six week period, the horses' sperm was analysed 16 times with, where possible, regular intervals between analyses. In the second six week period, the semen was analysed twice per week, such that twelve measurements were taken.

The ejaculate of the stallion was collected and divided into 0.5ml straws (containers). Although there was variability between stallions, the typically ejaculate provided approximately 60 - 70 straws each corresponding to 7 - 9 insemination doses.

The equine ejaculate were analysed using a SQA-Ve (Stallion) Semen Analyzer (available from Advanced Agricultural Technologies): i) directly upon issue; and ii) after being subjected to freezing at -196°C for a period of 24 hours, then thawed to room temperature. The semen was analyzed to at least assess the parameters: semen volume, consistency and quality; the percentage of active sperm; sperm morphology; and, the speed and form of sperm movement (motility). The presence of elements in the semen other than sperm, such as blood cells or evidence of infection was also observed. Where possible, certain observations were made upon the those aspects of stallion behaviour correlated to reproductive health (libido, vitality and stamina).

In 7 of the 8 stallions, the administration of both components of the nutritional supplement together increased at least one measured parameter for the directly issued and freeze-thawed equine ejaculate as compared to the initial condition of the stallion's sperm.

The results of the 12 week analysis period are summarised in Table 4 below:

**Table 4**

| **Stallion** | **Observations** |
|---|---|
| 1 | Increased fecundity (sperm concentration and motility), as compared to the initial analysis of the sperm, was observed from week 7. |
| 2 | Subjectively this stallion exhibited enhanced stamina, vitality and libido upon administration of the two component supplement. |
| 3 | (Father of Horse 1.) Initial analysis of sperm was that it was unsuitable for transport. Administration of the two-component supplement yielded: enhanced sperm motility; reduced irregular sperm movement; and, greater stability of the sperm cell membrane. Subjectively, this older stallion exhibited enhanced vitality, particularly from weeks 9 - 12. |
| 4 | Visual improvement in the quality of directly issued and frozen semen was observed upon administration of the micronutrient component. |
| 5 | Improvements in the parameters of cooled semen, as compared to the initial analysis of the sperm, were observed from week 1 of the component(s) administration. |
| 6 | Weeks 8 - 12: Consistently elevated active sperm concentration per sample, in both directly issued and cooled semen, as compared to the initial analysis of the sperm. |
| 7 | Weeks 8 - 12: Consistently elevated active sperm concentration per sample, in both directly issued and cooled semen as compared to the initial analysis of the sperm. |
| 8 | Weeks 9 - 12: irregularities in the acrosomal membrane, observed in the initial analysis of the directly issued and frozen sperm, had normalized. |

Certain analytical results are also illustrated the appended drawing in which:

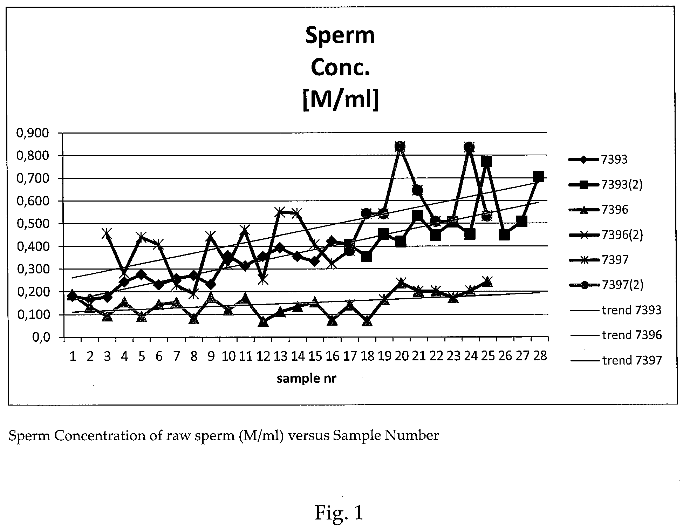

**Fig. 1** is graph of sperm concentration, expressed as 10⁶ sperm cells per milliliter (M/ml) in directly issued semen versus the sample number, the first and second components of the nutritional composition being administered together from sample 17 to sample 28.

The results for only three healthy stallions are depicted in part to ensure the clarity of Fig. 1. However, Fig. 1 clearly demonstrates that the administration of the two components together results in an elevated average concentration of sperms cells in each sample of the issued semen as compared to the average concentration in the issued samples of horses administered the micronutrient component alone. Further, the administration of the micronutrient component alone promotes, over time, an increase in the concentration of the active sperm cells per sample in two of the three represented horses (7393, 7397).

## Claims

1. An equine nutritional composition comprising:
i) a first component comprising micronutrients, wherein said micronutrients include:
based on the weight of the first component: 2 - 25 wt.% L-arginine; 2 - 15 wt.% L-carnitine; 0.5 - 5 wt.% L-lysine; 1 - 10 wt.% L-cysteine; 0.1 - 4 wt.% vitamin E, as all vitamins thereof; 0.001 - 0.1 wt.% vitamin B, as all vitamins thereof; 0 - 25 wt.% rosehip powder; 0.5 - 5 wt.% Maca; 0.5 - 10 wt.% Gingko biloba powder; 0 - 10 wt.% dried garlic; 0 -10 wt.% Lucerne; 0.01 - 0.8 wt.% zinc; 0 - 5 wt.% magnesium; 0 - 5 wt.% calcium; 0.0001 - 0.01 wt.% selenium; and, 0.01 - 6 wt.% further antioxidants
wherein said micronutrients include folate and,
ii) a second component comprising one or more fatty acids selected from each of the groups: omega-3 fatty acids; omega-6 fatty acids wherein the ratio by volume of omega-3: omega-6 fatty acids is in the range of from 1.1: 1 to 5: 1, preferably from 1.5: 1 to 3: 1;
and wherein at least one of the first and second component is in concentrated form.

2. The composition according to claim 1, wherein said second component further comprises at least one omega-9 fatty acid.

3. The composition according to claim 2, wherein the ratio by volume of omega-3: omega-9 fatty acids is in the range from 1.1:1 to 5:1, preferably from 1.5: 1 to 3: 1.

4. The composition according to claim 2, wherein the ratio by volume of omega-3: omega-6: omega-9 fatty acids in said second component is (1.5 - 2.5): 1: (0.7 - 1.3).

5. The composition according to any one of claims 1 to 4, wherein said first component further comprises at least one phytochemical selected from groups consisting of: carotenoid terpenoid compounds, non-carotenoid terpenoid compounds, flavonoid polyphenolic compounds, phenolic acids and mixtures thereof.

6. The composition according to claim 5, wherein said first component comprises extracts of at least one of Ginkgo Biloba leaf, lucerne and maca as the source of said phytochemical(s).

7. The composition according to any one of claims 1 to 6, wherein said first component comprises eugenol, preferably wherein said eugenol is provided by garlic.

8. The composition according to any one of claims 1 to 7 which is free of caffeine, theobromine, theophylline, atropine, scopolamine, morphine, butofenine, methylbufotenine and dimethyltryptamine.

9. The composition according to any one of claims 1 to 8 for use as a functional food in combination with one or more food types that are consumed as part of a usual equine diet.

10. A method for the artificial insemination of equines in which the semen is provided by a stallion which has been administered the composition as defined in any one claims 1 to 9, with the proviso that the artificial insemination does not comprise in vitro fertilization.

11. The method according to claim 10, wherein the semen has been stored at a temperature of less than 5°C, optionally in the presence of extenders, prior to insemination of the mare.

12. The method according to claim 11, wherein said semen has been frozen in liquid nitrogen and then thawed prior to insemination of the mare.

## Patentansprüche

1. Pferdeernährungszusammensetzung umfassend:
i) eine erste Komponente umfassend Mikronährstoffe, wobei genannte Mikronährstoffe beinhalten: basierend auf dem Gewicht der ersten Komponente: 2 - 25 Gew.% L-Arginin; 2 - 15 Gew.% L-Carnitin; 0,5 - 5 Gew.% L-Lysin; 1 - 10 Gew.% L-Cystein; 0,1 - 4 Gew.% Vitamin E, wie alle Vitamine davon; 0,001 - 0,1 Gew.% Vitamin B, wie alle Vitamine davon; 0 - 25 Gew.% Hagebuttenpulver; 0,5 - 5 Gew.% Maca; 0,5 - 10 Gew.% Gingko biloba Pulver; 0 - 10 Gew.% getrockneter Knoblauch; 0-10 Gew.% Luzerne; 0,01 - 0,8 Gew.% Zink; 0 - 5 Gew.% Magnesium; 0 - 5 Gew.% Calcium; 0,0001 - 0,01 Gew.% Selen; und 0,01 - 6 Gew.% weitere Antioxidantien
wobei genannte Mikronährstoffe Folat beinhalten und
ii) eine zweite Komponente umfassend eine oder mehrere Fettsäuren, die aus jeder der Gruppen ausgewählt sind: Omega-3-Fettsäuren; Omega-6-Fettsäuren wobei das Volumenverhältnis von Omega-3- : Omega-6-Fettsäuren in dem Bereich von 1,1 : 1 bis 5 : 1, bevorzugt von 1,5 : 1 bis 3 : 1 ist;
und wobei wenigstens eine von der ersten und zweiten Komponente in konzentrierter Form ist.

2. Zusammensetzung nach Anspruch 1, wobei genannte zweite Komponente ferner wenigstens eine Omega-9-Fettsäure umfasst.

3. Zusammensetzung nach Anspruch 2, wobei das Volumenverhältnis von Omega-3- : Omega-9-Fettsäuren im Bereich von 1,1 : 1 bis 5 : 1, bevorzugt von 1,5 : 1 bis 3 : 1 ist.

4. Zusammensetzung nach Anspruch 2, wobei das Volumenverhältnis von Omega-3- : Omega-6-: Omega-9-Fettsäuren in genannter zweiter Komponente (1,5 - 2,5) : 1 : (0,7 - 1,3) ist.

5. Zusammensetzung nach einem der Ansprüche 1 bis 4, wobei genannte erste Komponente ferner wenigstens eine Phytochemikalie umfasst, die aus Gruppen ausgewählt ist, die bestehen aus: carotinoiden Terpenoidverbindungen, nichtcarotinoiden Terpenoidverbindungen, flavonoiden Polyphenol-Verbindungen, Phenolsäuren und Mischungen davon.

6. Zusammensetzung nach Anspruch 5, wobei genannte erste Komponente Extrakte von wenigstens einem von Ginkgo Biloba Blättern, Luzerne und Maca als Quelle von genannter Phytochemikalie umfasst.

7. Zusammensetzung nach einem der Ansprüche 1 bis 6, wobei genannte erste Komponente Eugenol umfasst, wobei genanntes Eugenol bevorzugt aus Knoblauch bereitgestellt ist.

8. Zusammensetzung nach einem der Ansprüche 1 bis 7, die frei von Koffein, Theobromin, Theophyllin, Atropin, Scopolamin, Morphin, Bufotenin, Methylbufotenin und Dimethyltryptamin ist.

9. Zusammensetzung nach einem der Ansprüche 1 bis 8 zur Verwendung als ein funktionelles Lebensmittel in Kombination mit einer oder mehrerer Nahrungsmittelsorten, die als Teil von einer üblichen Pferdediät verbraucht werden.

10. Verfahren zur künstlichen Besamung von Pferden, in dem der Samen von einem Hengst erbracht ist, dem die Zusammensetzung wie in Ansprüchen 1 bis 9 definiert verabreicht wurde, mit der Bedingung, dass die künstliche Besamung in vitro Befruchtung nicht umfasst.

11. Verfahren nach Anspruch 10, wobei der Samen bei einer Temperatur von weniger als 5 °C gelagert wurde, optional in der Gegenwart von Streckmitteln, vor Besamung der Stute.

12. Verfahren nach Anspruch 11, wobei genannter Samen in flüssigem Stickstoff eingefroren und dann vor Besamung der Stute aufgetaut wurde.

## Revendications

1. Composition nutritive équine comprenant :
i) un premier composant comprenant des micronutriments, dans laquelle lesdits micronutriments incluent :
sur la base du poids du premier composant : 2 à 25 % en poids de L-arginine ; 2 à 15 % en poids de L-carnitine ; 0,5 à 5 % en poids de L-lysine ; 1 à 10 % en poids de L-cystéine ; 0,1 à 4 % en poids de vitamine E, ainsi que toutes les vitamines de celle-ci ; 0,001 à 0,1 % en poids de vitamine B, ainsi que toutes les vitamines de celle-ci ; 0 à 25 % en poids de poudre de cynorrhodon ; 0,5 à 5 % en poids de Maca ; 0,5 à 10 % en poids de poudre de Gingko Biloba ; 0 à 10 % en poids d'ail séché ; 0 à 10 % en poids de luzerne ; 0,01 à 0,8 % en poids de zinc ; 0 à 5 % en poids de magnésium ; 0 à 5 % en poids de calcium ; 0,0001 à 0,01 % en poids de sélénium ; et 0,01 à 6 % en poids d'autres antioxydants dans laquelle lesdits micronutriments incluent du folate et,
ii) un second composant comprenant un ou plusieurs acides gras choisis dans chacun des groupes suivants : les acides gras oméga 3 ; les acides gras oméga 6 dans laquelle le rapport en volume des acides gras oméga 3:oméga 6 est dans la plage de 1,1:1 à 5:1, de préférence de 1,5:1 à 3:1 ;
et dans laquelle l'un au moins des premier et second composants est sous forme concentrée.

2. Composition selon la revendication 1, dans laquelle ledit second composant comprend en outre au moins un acide gras oméga 9.

3. Composition selon la revendication 2, dans laquelle le rapport en volume des acides gras oméga 3:oméga 9 est dans la plage de 1,1:1 à 5:1, de préférence de 1,5:1 à 3:1.

4. Composition selon la revendication 2, dans laquelle le rapport en volume des acides gras oméga 3:oméga 6:oméga 9 dans ledit second composant est de (1,5 à 2,5):1:(0,7 à 1,3).

5. Composition selon l'une quelconque des revendications 1 à 4, dans laquelle ledit premier composant comprend en outre au moins un composé phytochimique choisi dans les groupes constitués des : composés caroténoïdes terpénoïdes, composés non caroténoïdes terpénoïdes, composés flavonoïdes polyphénoliques, acides phénoliques et mélanges de ceux-ci.

6. Composition selon la revendication 5, dans laquelle ledit premier composant comprend des extraits de l'un au moins parmi la feuille de Ginkgo biloba, la luzerne et le maca en tant que source dudit ou desdits composés phytochimiques.

7. Composition selon l'une quelconque des revendications 1 à 6, dans laquelle ledit premier composant comprend de l'eugénol, de préférence dans laquelle ledit eugénol est fourni par l'ail.

8. Composition selon l'une quelconque des revendications 1 à 7, qui est dépourvue de caféine, de théobromine, de théophylline, d'atropine, de scopolamine, de morphine, le bufoténine, de méthylbufoténine et de diméthyltryptamine.

9. Composition selon l'une quelconque des revendications 1 à 8 pour une utilisation comme alimentation fonctionnelle en combinaison avec un ou plusieurs types d'aliment qui sont consommés en tant que partie d'un régime équin habituel.

10. Procédé d'insémination artificielle d'équidés, dans lequel le sperme est fourni par un étalon à qui la composition telle que définie dans l'une quelconque des revendications 1 à 9 a été administrée, à condition que l'insémination artificielle ne comprenne pas de fertilisation in vitro.

11. Procédé selon la revendication 10, dans lequel le sperme a été stocké à une température inférieure à 5 °C, éventuellement en présence de diluants, avant l'insémination de la jument.

12. Procédé selon la revendication 11, dans lequel ledit sperme a été congelé dans de l'azote liquide et ensuite décongelé avant l'insémination de la jument.
